Europäisches Patentamt

European Patent Office

Office européen des brevets

(11) Veröffentlichungsnummer: **0 384 972**

**A2**

## (12) EUROPÄISCHE PATENTANMELDUNG

(21) Anmeldenummer: 89122448.7

(22) Anmeldetag: 05.12.89

(51) Int. Cl.5: **B60L 5/14**

(30) Priorität: 25.02.89 DE 3905962

(43) Veröffentlichungstag der Anmeldung:
05.09.90 Patentblatt 90/36

(84) Benannte Vertragsstaaten:
**AT DE FR SE**

(71) Anmelder: **SCHUNK BAHNTECHNIK GMBH**
**Mayrwiesstrasse 56**
**A-5023 Salzburg(AT)**

(72) Erfinder: **Rabacher, Franz**
**Peter-Pfennigerstrasse 50**
**A-5020 Salzburg(AT)**
Erfinder: **Fichtner, Herbert**
**Golsweg 3**
**A-5020 Salzburg(AT)**
Erfinder: **Wiessler, Ulrich, Dr.**
**Plankenfeld 52**
**D-6330 Wetzlar(DE)**

(74) Vertreter: **Sternagel, Hans-Günther, Dr. et al**
**Patentanwälte Dr. Michael Hann Dr. H.-G.**
**Sternagel Sander Aue 30**
**D-5060 Bergisch Gladbach 2(DE)**

(54) **Sicherheitssystem für absenkbare Stromabnehmer von Fahrzeugen.**

(57) Sicherheitssystem für absenkbare Stromabnehmer von Fahrzeugen, bei dem der Pantograph pneumatisch oder hydraulisch angehoben wird mit einem in einer Halterung befestigten Kohleschleifstück, das einen Hohlraum für ein unter Druck stehendes Medium aufweist und einer eine Drossel aufweisenden Zuführleitung für das fluide Medium im Hohlraum und einer Druckmeßvorrichtung, die bei Druckabfall des fluides Mediums im Hohlraum das Absenken des Pantographen auslöst, wobei der Hohlraum als eine oder mehrere Längsnuten in der Granzfläche zwischen der Fassung des Kohleschleifstückes und der der Fassung zugewandten Oberfläche der porösen Kohleleiste ausgebildet ist und die Nuten gegen die Fassung druckdicht abgedichtet sind und der Ansprechpunkt der Druckmeßvorrichtung auf die durch die Porosität des Kohlenstoffmaterials bestimmte Leckrate für das fluide Medium abgestimmt ist.

## Sicherheitssystem für absenkbare Stromabnehmer von Fahrzeugen

Die Erfindung betrifft ein Sicherheitssystem für Stromabnehmer für elektrisch angetriebene Fahrzeuge mit einem speziell ausgebildeten Kohleschleifstück.

Absenkbare Stromabnehmer mit einem oder mehreren Bügeln, die Kohleschleifleisten aufweisen für elektrisch angetriebene Fahrzeuge, sind seit langem bekannt. Verschleiß oder Bruch des Kohleschleifstückes am Stromabnehmer kann bei den heute üblichen hohen Geschwindigkeiten zur Schäden am Oberleitungssystem führen. Es wurden deshalb bereits Überwachungs- und Sicherheitssysteme entwickelt, die bei Bruch oder Beschädigung des Kohleschleifstückes den sogenannten Pantographen von der Oberleitung trennen.

Aus GB-A-1,374,972 ist ein Kohleschleifstück für Stromabnehmer (Pantographen) bekannt, bei dem in eine Nut des Kohlekörpers ein fluides Medium enthaltendes Rohr eingelassen ist. Das dichte Rohr kann auch dadurch ausgebildet werden, daß die Wandung einer Bohrung durch das Kohleschleifstück mit einem dichtenden Polymer imprägniert wird. Das dichte Rohr ist an ein unter Druck stehendes fluides Medium angeschlossen. Bei Verschleiß oder Bruch des Kohleschleifstückes wird auch das Rohr zerstört und es tritt ein Druckabfall des fluiden Mediums im Überwachungssytem auf, so daß über ein Steuersignal das Einziehen des Pantographen ausgelöst wird. Die Verwendung eines zerstörbaren, Druckluft enthaltenden Behälters, der im Kohleschleifstück angeordnet ist, als Teil eines Sicherheitssystems von Pantographen wird auch von D.L. Dixon in "The Railway Engineering Journal", Vol. 2, Nr. 5, Seiten 1-14 (Sept. 1973) beschrieben. Ein Druckabfall bei Zerstörung des Behälters infolge Defekten am Kohleschleifstück löst einen Steuerbefehl zum Absenken des Pantographen aus.

Eine Weiterenwicklung des aus GB-A-1,374,972 bekannten Sicherungssystems ist in GB-A-2,107,662 beschrieben. Bei dieser Ausführungsform wird das Rohr aus einem zerreißbaren Material in einer solch geringen Wandstärke ausgebildet und das fluide Medium, beispielsweise Preßluft, unter einem Arbeitsdruck von 10 bar verwendet, so daß jeder Defekt des Kohleschleifstückes zu einem Bersten des Rohres und Druckabfall in dem Sicherheitssystem führt.

Aufgabe der vorliegenden Erfindung ist es, das Sicherheitssystem, insbesondere die Ausbildung der Kohleschleifleiste, weiter zu verbessern und so auszubilden, daß die Fertigung einfacher und kostengünstiger als bei den bekannten Systemen möglich ist.

Diese Aufgabe wird gelöst durch ein Sicherheitssystem für absenkbare Stromabnehmer von Fahrzeugen, bei dem der Pantograph pneumatisch oder hydraulisch angehoben wird mit einem in einer Halterung befestigten Kohleschleifstück, das einen Hohlraum für ein unter Druck stehendes fluides Medium aufweist und einer eine Drossel aufweisenden Zuführleitung für das fluide Medium im Hohlraum und einer Druckmeßvorrichtung, die bei Druckabfall des fluiden Mediums im Hohlraum das Absenken des Pantographen auslöst, dadurch gekennzeichnet, daß der Hohlraum als eine oder mehrere Längsnut(en) in der Grenzfläche zwischen der Fassung des Kohleschleifstückes und der der Fassung zugewandten Oberfläche der porösen Kohleleiste ausgebildet ist und die Nut(en) gegen die Fassung druckdicht abgedichtet ist (sind) und der Ansprechpunkt der Druckmeßvorrichtung auf die durch die Porosität des Kohlenstoffmaterials der Kohleleiste bestimmte Leckrate für das fluide Medium abgestimmt ist.

Die Nut(en) können sowohl in der die Kohleleiste aufnehmenden Fläche der Fassung, als auch in der der Fassung zugewandten Oberfläche der Kohleleiste ausgebildet sein. In der Regel ist eine Längsnut bis in die Nähe der Enden der Kohleleiste ausreichend. Es können jedoch auch mehrere parallele Nuten ausgebildet werden, wobei diese gegebenenfalls auch untereinander verbunden ein können, so daß nur eine dichte Zuführleitung für den Hohlraum in Form der Nuten erforderlich ist.

Das Prinzip der erfindungsgemäßen Lösung beruht darauf, daß die natürliche Leckrate des Kohlenstoffmaterials aufgrund seiner Porosität ausgenutzt wird, um einen Grenzwert für die Leckrate des fluiden Mediums aus den Nuten festzulegen, bei dessen Überschreitung die Druckmeßeinrichtung den dadurch bedingten Druckabfall aufnimmt und ein Steuersignal zum Absenken des Pantographen auslöst. Die natürliche Leckrate für das unter Druck stehende fluide Medium wird dann überschritten, wenn die Kohleleiste durch Bruch beschädigt wird, oder aus der festen Haftung der Fassung mehr oder weniger stark gelöst wird. Auch bei Erreichen der Abnutzungsgrenze der Kohleleiste steigt die Leckrate an und macht sich in einem Druckabfall innerhalb des fluiden Mediums bemerkbar, wenn dessen Zufuhr in die Nut der normalen Leckrate entspricht. Das fluide Medium wird unter Druck von einer Quelle ständig über eine Leitung der Nut zugeführt, um auf diese Weise den Verlust entsprechend der natürlichen Leckrate auszugleichen.

Bei einer besonders einfachen Ausführungsform der Erfindung wird eine gedrosselte Bypaßleitung der Pneumatikversorgung für den Balgenantrieb des Pantographen, der das Kohlenschleifstück anhebt oder senkt, durch die Nut im Kohleschleifstück zu einem 3/2-Wegeventil geführt. Wird der am Druckmeßgerät eingestellte Grenzwert der durch die Porosität des Kohlenstoffmaterials bestimmten Leckrate überschritten, kann dieses Ventil die selbsttätige Absenkung des Stromabnehmers als Druckmeßvorrichtung direkt auslösen.

Als geeignetes fluides Medium kommen Preßluft, unter Druck stehende Gase, aber auch Flüssigkeiten, z.B. niedrigviskose Hydrauliköle in Frage.

Die Porosität des Kohlenstoffmaterials der Kohleleiste beträgt zwischen 4 und 18 Vol.%, vorzugsweise 12 Vol.%.

Die dichte Verbindung zwischen Fassung und Kohleleiste kann in Kleb-, Löt- und Klemmtechnik ausgeführt werden. Im Falle von Klebtechnik wird die dichte Verbindung zwischen Fassung und kohleleiste mittels einer Klebstoffschicht ausgebildet, wobei bei der Montage des Kohleschleifstückes darauf geachtet werden muß, daß der Luftkanal in der Schleifleiste durch den Klebstoff nicht verschlossen wird und auch die Nutoberfläche vom Klebstoff nicht benetzt wird, weil dies die Leckrate der Kohleleiste beeinflussen würde. Im Falle von Klemmbefestigung wird zusätzlich eine Dichtmasse zwischen Fassung und Kohleschleifleiste eingebracht, um Druckverluste an der Verbindungsstelle zu vermeiden. Die dichte Verbindung kann im Falle von Metallfassungen auch durch Löten erfolgen, wenn auf der Unterseite im Bereich außerhalb der Nut die Kohleleiste metallisiert, beispielsweise verkupfert ist.

Fig. 1 und 2 zeigen schematisch Querschnitte von Kohleschleifleisten mit den zwei alternativen Ausführungsformen der Anordnung der Nut.

Fig. 3 und 4 zeigen die Leckrate des Kohlenstoffmaterials unterschiedlicher Dicke bei statischer Messung (Druckabfall in Abhängigkeit von der Zeit, mit Luft als fluidem Medium.

Fig. 5 zeigt die Leckrate bei dynamischer Messung für Kohlenstoffmaterialien unterschiedlicher Porosität mit Luft als fluidem Medium.

Fig. 6 zeigt mit Luft als fluidem Medium die Leckrate für zwei Materialien in Abhängigkeit von der Materialdicke.

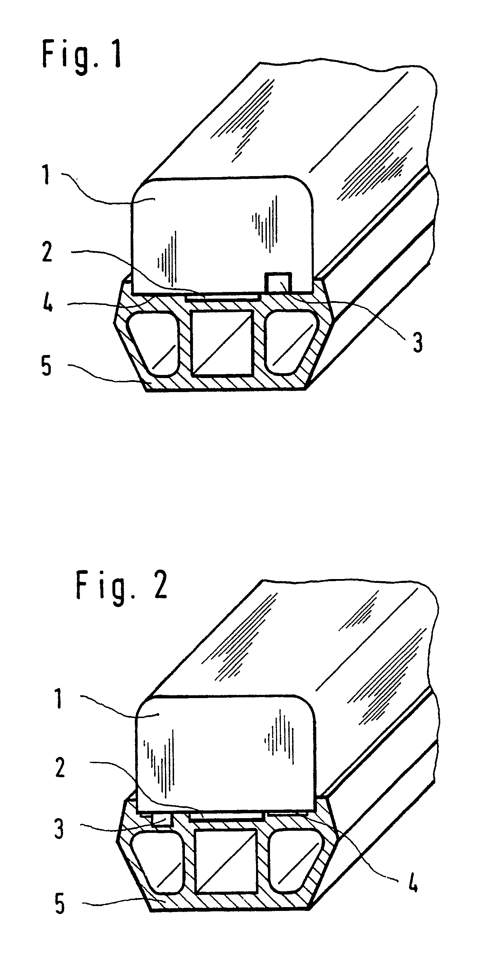

In Fig. 1 ist die Kohleleiste 1 mittels Klebverbindung 4 in die Fassung 5 fest eingefügt. Zur Verbesserung des Stromüberganges ist ein elektrisches Kontaktband 2 zwischen Fassung und Kohleleiste angeordnet. Die Nut 3 bei Ausbildung eines Luftkanals für das unter Überdruck stehende fluide Medium ist bei dieser Ausführungsform in der Kohleleiste 1 ausgebildet.

Bei der in Fig. 2 wiedergegebenen Ausführungsform ist die Kohleleiste 1 ebenfalls in die Fassung 5 mittels Klebverbindung 4 eingefügt. Es ist ebenso ein elektrisches Kontaktband 2 zwischen Fassung 5 und Kohleleiste 1 im mittleren Bereich der Fassung vorhanden. Die als Kanal für das fluide Medium dienende Nut 3 ist bei dieser Ausführungsform in der Fassung 5 ausgebildet. Bei dieser Ausführungsform ist es wesentlich, daß die Porosität der Kohleleiste im Bereich der Nut 3 nicht durch die Verbindung mit der Fassung 5 verändert ist.

Größe und damit die Oberfläche der Nut(en) wird auf den erwünschten Grenzwert für die Abnutzung der Kohleschleifleiste abgestimmt, wobei der Druck des fluiden Mediums mit berücksichtigt wird. Wird die Kohleschleifleiste vor Erreichen des Abnutzungssollgrades aus irgendwelchen Gründen beschädigt, erhöht sich an der Schadstelle die Leckrate des fluiden Mediums, so daß der eingestellte Grenzwert überschritten wird und das Sicherheitssystem anspricht.

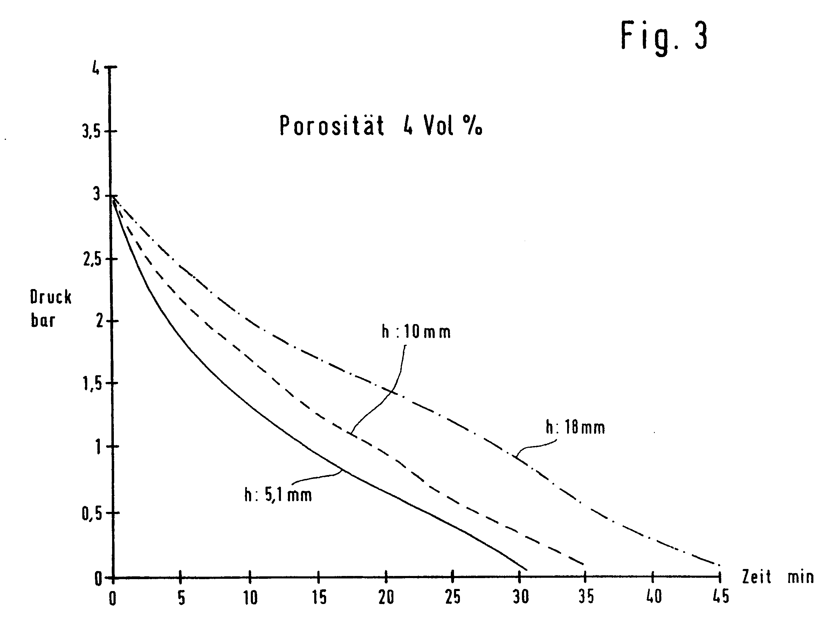

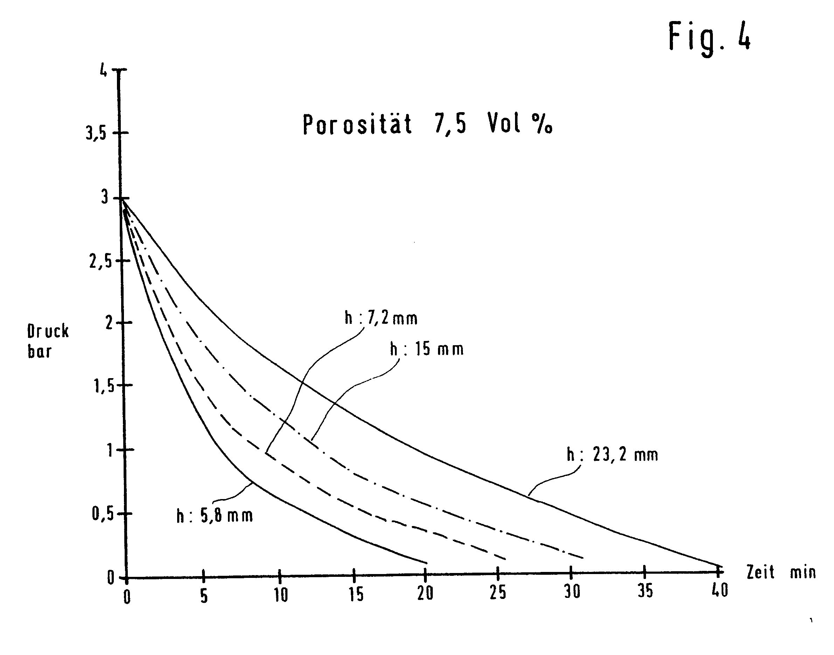

Abb. 3 und 4 zeigen den bei statischen Messungen abnehmenden Druck in der Nut für zwei verschiedene Kohlenstoffmaterialien unterschiedlicher Porosität (4 Vol.% und 7,5 Vol.%) bei unterschiedlichen Schichtdicken des Kohlenstoff. Ausgehend von einem Anfangsdruck von 3 bar fällt der Druck je nach Dicke der Kohlenstoffleiste mehr oder weniger schnell ab (gemessen wurden Kohlenstoffleisten mit 5,1, 10 und 18 mm Dicke), bei größerer Porosität des materials entsprechend schneller. Geht man davon aus, daß ein Druckabfall von 0,1 bis 1 bar ausreichend ist, um als sicheres Anzeichen für einen Defekt zu gelten, würde ohne Nachlieferung von fluidem Medium bei Anfangsdrucken von beispielsweise 3 bar eine Abnahme der Dicke der Kohleleiste mit einer Porosität von 7,5 Vol.% von 23,2 auf 7,2 mm die Leckrate so stark ansteigen lassen, daß ein Druckabfall um 1 bar in etwa der halben Zeit stattfindet, geringe Druckunterschiede treten entsprechend schneller auf.

Vergleichbare Daten sind für ein Kohlenstoffmaterial mit einer Porosität von 4 Vol.% zu entnehmen.

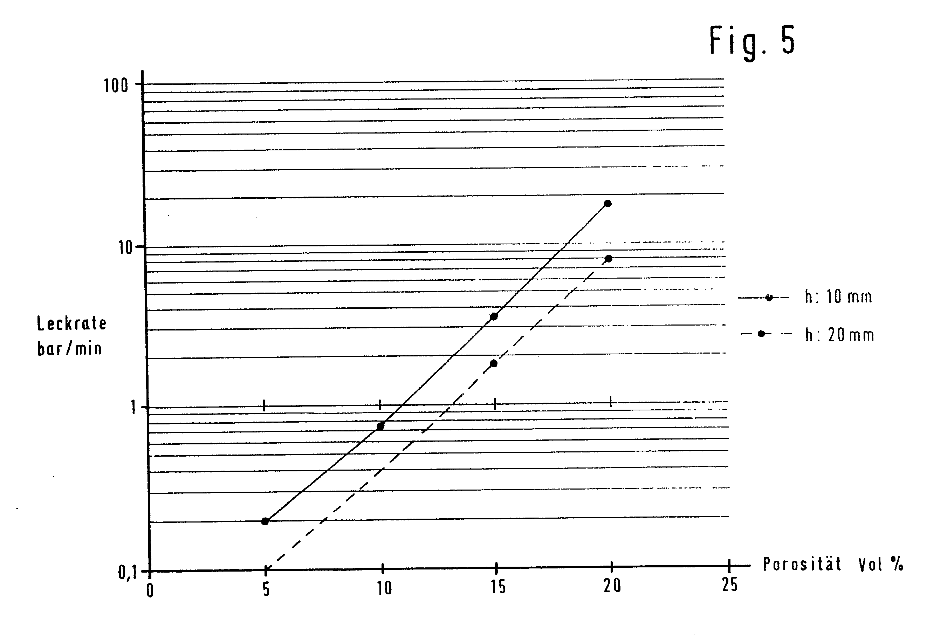

Fig. 5 zeigt die Leckrate, d.h. den Druckabfall bei dynamischer Messung für zwei unterschiedliche Materialstärken, 10 mm und 20 mm. Bei einer Porosität der Kohlenstoffleiste von beispielsweise 10 Vol.% tritt bei 20 mm Dicke der Leiste ein Druckabfall von 0,4 auf, der sich bei 10 mm Dicke auf 0,75 bar erhöht. Die Unterschiede werden mit steigender Porosität größer. Es ist jedoch nicht zweckmäßig zu poröses Kohlenstoffmaterial zu wählen, da sonst bei laufendem Betrieb die natürliche Leckrate zu hoch ist und die Kosten für die Nachlieferung des fluiden Mediums zu stark ansteigen. Bevorzugt ist deshalb eine Porosität zwischen 4 und 12 Vol.%.

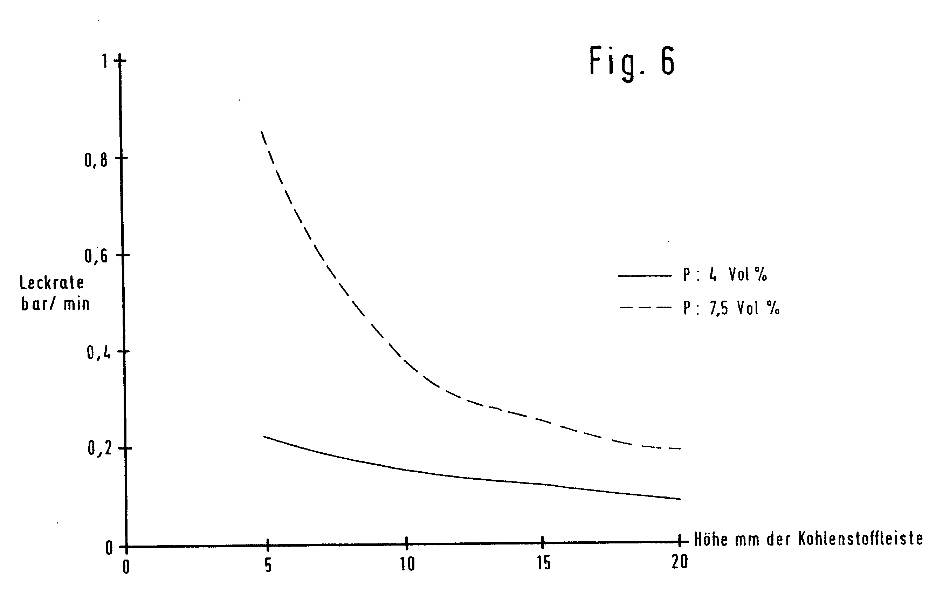

In Fig. 6 ist der Druckabfall in Abhängigkeit von der Materialdicke für Kohlenstoffmaterial mit Porositäten von 4 Vol.% und 7,5 Vol.% angegeben. Beim Kohlenstoffmaterial von 4 Vol.% Poren führt eine Verringerung der Schichtdicke von 20 mm auf 10 mm nahezu zu einer Verdoppelung der Leckrate, wobei allerdings die absoluten Druckunterschiede nur in der Größenordnung von etwa 0,1 bar betragen, während bei 7,5 Vol.% Porenanteil die Verdoppelung der Leckrate bei der gleichen Schichtdickenverringerung einen Druckunterschied von etwa 0,2 bar zur Folge hat. Auch diese Messungen erfolgten mit einem Ausgangsdruck von 3 bar. Aus den Diagrammen 3-6 kann der Fachmann für Kohlenstoffmaterial gegebener Porosität die natürliche Leckrate für die unterschiedlichen Schichtdicken entnehmen und damit den gerade noch zulässigen Druckabfall für eine bestimmte festgelegte Schichtdickenabnahme bestimmen. Wird die Druckmeßeinrichtung auf einen Sollwert für das Ansprechen eingestellt, der geringfügig unterhalb der gerade noch zulässigen Leckrate bzw. dem damit verbundenen Druckabfall eingestellt, ist mit Sicherheit gewährleistet, daß bei Erreichen des festgelegten Verschleißes und Verringerung der Schichtdicke der Kohlenstoffleiste oder bei sonstiger Beschädigung der Druckabfall im fluiden Medium das Signal zum Einziehen des Pantographen auslöst.

**Ansprüche**

1. Sicherheitssystem für absenkbare Stromabnehmer von Fahrzeugen, bei dem der Pantograph pneumatisch oder hydraulisch angehoben wird mit einem in einer Halterung befestigten Kohleschleifstück, das einen Hohlraum für ein unter Druck stehendes fluides Medium aufweist und einer eine Drossel aufweisenden Zuführleitung für das fluide Medium im Hohlraum und einer Druckmeßvorrichtung, die bei Druckabfall des fluiden Mediums im Hohlraum das Absenken des Pantographen auslöst, dadurch gekennzeichnet, daß der Hohlraum als eine oder mehrere Längsnut(en) (3) in der in der Grenzfläche zwischen der Fassung (5) des Kohleschleifstückes und der der Fassung (5) zugewandten Oberfläche der porösen Kohleleiste (1) ausgebildet ist und die Nut(en) (3) gegen die Fassung (5) druckdicht abgedichtet ist (sind), daß die durch das Kohlenstoffmaterial gebildeten Begrenzungsflächen des Hohlraumes nicht abgedichtet sind und der Ansprechpunkt der Druckmeßvorrichtung auf die durch die Porosität des Kohlenstoffmaterials der Kohleleiste (1) bestimmte Leckrate für das fluide Medium abgestimmt ist.

2. Sicherheitssystem nach Anspruch 1, **dadurch gekennzeichnet,** daß die Nut(en) (3) in der die Kohleleiste (1) aufnehmenden Fläche der Fassung (5) ausgebildet ist (sind).

3. Sicherheitssystem nach Anspruch 1, **dadurch gekennzeichnet,** daß die Nut(en) (3) in der der Fassung zugewandten Oberfläche der Kohleleiste (1) ausgebildet ist (sind).

4. Sicherheitssystem nach jedem der Ansprüche 1 bis 3, **dadurch gekennzeichnet,** daß die Porosität des Kohlenstoffmaterials der Kohleleiste (1) 12 Vol.% beträgt.

5. Sicherheitssystem nach Anspruch 1, **dadurch gekennzeichnet,** daß die dichte Verbindung zwischen Fassung (5) und eine Kohleleiste (1) mittels Klebverbindung (4) ist.

6. Sicherheitssystem nach Anspruch 1, **dadurch gekennzeichnet,** daß die dichte Verbindung zwischen Fassung (5) und Kohleleiste (1) durch Klemmverbindung der beiden Teile mit einer zwischengelegten Dichtungsmasse ist.

7. Sicherheitssystem nach Anspruch 1, **dadurch gekennzeichnet,** daß die dichte Verbindung zwischen Metallfassung (5) und der auf der Unterseite im Bereich außerhalb der Nut(en) (3) metallisierten Kohleleiste (1) eine Lötverbindung ist.

8. Sicherheitssystem nach jedem der Ansprüche 1 bis 7, **dadurch gekennzeichnet,** daß eine Rückführleitung für das unter Druck stehende fluide Medium von der Nut(en) (3) zur Druckmeßvorrichtung vorhanden ist.

## Fig. 1

## Fig. 2

# Fig. 3

Porosität 4 Vol %

Druck bar (y-axis)

Zeit min (x-axis)

h : 10 mm

h : 18 mm

h : 5,1 mm

EP 0 384 972 A2

Fig. 4

Fig. 5

EP 0 384 972 A2

Fig. 6

EP 0 384 972 A2